# EUROPÄISCHE PATENTANMELDUNG

(11) **EP 3 470 703 A1**
(43) Veröffentlichungstag der Anmeldung: **17.04.2019**
(21) Anmeldenummer: 18196803.3
(22) Anmeldetag: 26.09.2018
(51) Int. Cl.: F16F 1/393, F16F 3/087

(54) **KONUSLAGER ALS ELASTOMER-METALL-LAGER**

(30) Priorität: 06.10.2017 DE 102017009288
(71) Anmelder: Jörn GmbH, 71336 Waiblingen (DE)
(72) Erfinder: Reinke, Kai, 71686 Remseck (DE); Mursinsky, Jörg, 71522 Backnang (DE)
(74) Vertreter: Liebl, Thomas

(57) **Zusammenfassung**

Die Erfindung betrifft ein Konuslager als Elastomer-Metall-Lager mit einem konvexen, kegelförmigen Konusinnenteil (2) als erstes starres Metall-Lagerteil, mit einem konkaven konischen Außenringteil als zweites starres Metall-Lagerteil, wobei das Konusinnenteil (2) mit einem umlaufenden Ringspalt (9) zwischen dem Konusinnenteils (2) und dem Außenringteil (6, 7) aufgenommen ist, und mit einem Elastomer-Ringelement (10, 11) im Ringspalt (9) zwischen dem Konusinnenteil (2) und dem Außenringteil (6, 7). Erfindungsgemäß sind das Außenringteil und das Elastomer-Ringteil in einer radial Teilungsebene (5) geteilt in ein erstes Außenringteil (6) und in ein diesem zugeordnetes erstes Elastomer-Ringelement (10) sowie in ein zweites Außenringteil (7) und in ein diesem zugeordnetes zweites Elastomer-Ringelement (11). Im unbelasteten Herstellzustand sind bei am Konusinnenteil (2) anliegenden Elastomer-Ringteilen (10, 11) die beiden Außenringteile (6, 7) durch einen Radialspalt (14) zwischen dem ersten Außenringteil (6) und dem zweiten Außenringteil (7) beabstandet. Zudem ist eine Stellvorrichtung (15) an den Außenringteilen (6, 7) angeordnet zur Änderung und Einstellung der Spaltbreite des Radialspalts (14) dergestalt, dass durch eine Spaltbreitenvergrößerung oder durch eine Spaltbreitenverkleinerung eine zugeordnete Änderung und Einstellung der axialen und radialen Federkonstante des Konuslagers (1; 25) durchführbar ist.

## Beschreibung

Die Erfindung betrifft ein Konuslager als Elastomer-Metall-Lager nach dem Oberbegriff des Anspruchs 1.

Die Erfindung geht aus von einem allgemein bekannten Konuslager als Elastomer-Metall-Lager in der Art eines Einfach-Konuslagers. Ein solches Einfach-Konuslager in Standardausführung weist ein konvexes, kegelstumpfförmiges Konusinnenteil als erstes starres Metall-Lagerteil auf, welches mit einem von zwei gegeneinander elastisch abstützbaren Strukturbauteilen und/oder Anbauteilen verbindbar ist. Weiter weist ein solches Konuslager ein konkaves Außenringteil als zweites starres Lagerteil zur Verbindung mit dem zweiten Strukturbauteil und/oder Anbauteil auf mit einer der Kegelform des Konusinnenteils entsprechenden Konusinnenfläche, wobei das Konusinnenteil mit einem umlaufenden Ringspalt zwischen der Kegelfläche des Konusinnenteils und der Konusinnenfläche im Außenringteil aufgenommen ist. Im Ringspalt zwischen dem Konusinnenteil und dem Außenringteil ist ein konusförmiges Elastomer-Ringelement angeordnet. Bei Verwendung von Gummimaterial als Elastomermaterial ist das Elastomer-Ringelement üblicherweise als Elastomerschicht im Ringspalt einvulkanisiert.

Ein solches gattungsgemäßes Konuslager kann Relativbewegungen seiner Metall-Lagerteile elastisch sowohl in axialer als auch in radialer Richtung mit einer bestimmten, durch die Lagerdimensionierung vorgegebenen Steifigkeit abstützen. Bei diesen Standardlagern ist eine Änderung der Steifigkeit entsprechend einer Änderung der axialen und/oder radialen Federkonstante nur durch Veränderung der Bauteilgeometrie und/oder der Gummihärte möglich.

Aufgabe der Erfindung ist es, ein gattungsgemäßes Konuslager so weiterzubilden, dass auf einfache Weise, insbesondere ohne Änderung der Gummihärte und/oder der Bauteilgeometrie dessen Steifigkeit veränderbar und einstellbar ist.

Diese Aufgabe wird dadurch gelöst, dass das Außenringteil und das Elastomer-Ringteil in einer radialen Teilungsebene quer zur Kegelachse des Konusinnenteils geteilt sind in ein erstes Außenringteil und ein diesem zugeordnetes erstes Elastomer-Ringelement mit jeweils größerem Konus-Innendurchmesser, sowie in ein zweites Außenringteil und ein diesem zugeordnetes zweites Elastomer-Ringelement mit jeweils einem dagegen kleineren Konus-Innendurchmesser.

Die Anordnung ist dabei so gestaltet, dass im unbelastetem Herstellzustand bei am Konusinnenteil anliegenden Elastomer-Ringelementen die beiden Außenringteile durch einen Radialspalt zwischen dem ersten Außenringteil und dem zweiten Außenringteil beabstandet sind, insbesondere durch Dickenunterschiede der beiden Elastomer-Ringelemente und/oder durch Konusformunterschiede.

Zudem ist eine Stellvorrichtung an den Außenringteilen angeordnet zur Änderung und Einstellung der Spaltbreite des Radialspalts, dergestalt, dass durch eine Spaltbreitenvergrößerung oder durch eine Spaltbereitenverkleinerung mit Aufbringung einer Vorspannung und einer Schichtdickenänderungen der Elastomer-Ringelemente eine zugeordnete Änderung und Einstellung der axialen und radialen Federkonstante des Konuslagers durchführbar ist.

Beim erfindungsgemäßen Konuslager handelt es sich somit im Prinzip um ein einfach und kostengünstig aufgebautes Einfachkonuslager, bei dem jedoch das Außenringteil zweigeteilt ist mit einem verstellbaren Radialspalt. Mit einer Radialspaltverstellung ist eine Schichtdickenänderung der Elastomer-Ringelemente verbunden, wodurch in gewissen Bereichen die Lagersteifigkeit, insbesondere eine Federkonstante in axialer Richtung veränderbar und einstellbar ist.

Vorteilhaft kann ein solches einstellbares Konuslager in gewissen Grenzen an unterschiedliche Einbaugegebenheiten angepasst werden. Vorteilhaft können damit auch einstellbare Konuslager, welche für unterschiedliche Einbaugegebenheiten geeignet sind, in größerer Stückzahl vorgehalten werden, ohne dass für jeden speziellen Lagereinsatz Konuslager subjektiv dimensioniert und hergestellt werden müssen. Die Modifikation eines gattungsgemäßen Konuslagers zur Realisierung der Einstellbarkeit ist durch die Verwendung von zwei Außenringteilen in Verbindung mit einer einfach ausführbaren Stellvorrichtung insgesamt einfach und kostengünstig durchführbar.

Expliziert wird darauf hingewiesen, dass im Begriff "Elastomer-Metall-Lager" das Wort "Metall" in fachüblicher Weise weit auszulegen ist, so dass neben starren, weitgehend unverformbaren Metallmaterialien auch vergleichbare andere Materialien, insbesondere unverformbare, starre Kunststoffmaterialien mit umfasst sein sollen. Unter dem Begriff "Elastomer" wird fachüblich meistens "Gummi" verstanden, wobei jedoch auch Gummi-Ersatzstoffe mit umfasst sein sollen.

In bevorzugten Ausführungsformen des Konuslagers soll jedenfalls das erste Elastomer-Ringelement, das heißt das Elastomer-Ringelement mit dem größeren Konusdurchmesser sowohl am Konusinnenteil als auch am ersten Außenringteil angehaftet sein; bei Verwendung von Gummi als Elastomermaterial soll dieses erste Elastomer-Ringelement an den Anlageflächen anvulkanisiert sein.

In einer Weiterbildung als erste Ausführungsform soll auch das zweite Elastomer-Ringelement am Konusteil und am zweiten Außenringteil angehaftet bzw. anvulkanisiert sein, dergestalt, dass im unbelasteten Herstellzustand der vorstehend erläuterte Radialspalt zwischen dem ersten Außenringteil und zweiten Außenringteil ausgebildet ist. Ausgehend von diesem Herstellzustand kann mittels der Stellvorrichtung die Spaltbreite verringert werden, wodurch unter Aufbringung einer Vorspannung die Schichtdicke der Elastomer-Ringelemente, insbesondere die Schichtdicke des zweiten Elastomer-Ringelements so verändert wird, dass das Konuslager eine größere Federsteifigkeit, insbesondere mit größerer axialer Federkonstante erhält. Die größtmögliche Verstellung und größte Federsteifigkeit ist erreicht, wenn beide Außenringteile auf Block aneinanderliegen. Dabei wird zusätzlich eine Wulstausbildung an den Elastomer-Ringteilen eingeschränkt, was ebenfalls zur Erhöhung der Federsteifigkeit beiträgt. Je nach Bauweise des Konuslagers kann mit dieser Maßnahme die Federsteifigkeit um einen Faktor 2 bis 3 vergrößert werden. Gegebenenfalls kann bei dieser Ausführungsform, bei der beide Elastomer-Ringelemente fest am Konusinnenteil angehaftet sind, durch eine verstellbare Vergrößerung der Spaltbreite im Vergleich zum unbelasteten Herstellzustand auch eine Verringerung der Federsteifigkeit erhalten werden.

In einer alternativen Weiterbildung als zweite Ausführungsform ist das zweite Elastomer-Ringelement nicht am Konusinnenteil angehaftet. Das zweite Elastomer-Ringelement ist nur am zweiten Außenringteil angehaftet und die Innenseite des zweiten Elastomer-Ringelements ist durch ein dort angehaftetes Konus-Innenblech gebildet. Das so ausgebildete zweite Außenringteil mit dem zweiten Elastomer-Ringelement und dem angehafteten Konusinnenblech ist ein auf das Konusinnenteil aufsteckbares Vormontageelement. Zur Komplettierung des Konuslagers wird dieses Vormontageelement auf das Konusinnenteil aufgesteckt und mit der Stellvorrichtung verbunden. Auch hier sind die Elastomer-Ringelemente und/oder Außenringteile so gestaltet, dass im unbelasteten Herstellzustand bei aufgestecktem Vormontageelement ein Radialspalt zwischen den beiden Außenringteilen gebildet ist.

Eine grobe Anpassung an sehr unterschiedliche Lagergegebenheiten kann bei dieser Ausführungsform auch einfach dadurch vorgenommen werden, dass ein Set unterschiedlich dimensionierter Vormontageelemente, bei jeweils gleicher Form der übrigen Lagerbauteile, zur Verfügung gestellt wird, wobei dann zusätzlich die Möglichkeit einer Radialspaltverstellung besteht.

In einer besonders bevorzugten Weiterbildung weist die Kegelfläche des Konusinnenteils im Bereich des aufgesteckten Konusinnenblechs einen radialen Rückversatz um die Dicke des Konus-Innenblechs auf, mit einem radial umlaufenden Vorsprung in Aufsteckrichtung für eine axiale Abstützung des Konusinnenblechs und damit des zweiten Elastomer-Ringelements in Richtung auf das erste Außenringteil. Bei einer Radialspaltverringerung ist somit das zweite Elastomer-Ringelement an einer vorgegebenen Position durch das Konus-Innenblech am Konusinnenteil festgelegt und abgestützt.

Im Einbauzustand wird das Konuslager vorzugsweise mit einer Kegelachse in Vertikalrichtung mit einer nach unten weisenden Kegelverjüngung angeordnet. Dabei können am oberen Außenringteil außenrandseitig Anschlusselemente zur Verbindung eines Strukturbauteils und/oder eines Anbauteils angebracht sein. Am Konusinnenteil erfolgt üblicherweise ein Anschluss eines zweiten Strukturbauteils und/oder Anbauteils über eine zentrale Anschlussbohrung.

Als Stellvorrichtung an den beiden Außenringteilen zur Verstellung der Radialspaltweite können unterschiedliche, an sich bekannte Linearstellvorrichtungen verwendet werden. Insbesondere können auch zwischen zwei Einstellungen umschaltbare Stellvorrichtungen verwendet werden. Als besonders einfache und kostengünstige Stellvorrichtung werden wenigstens eine, vorzugsweise mehrere gegeneinander versetzte Stellschrauben vorgeschlagen, die durch eine achsparallele Bohrung im ersten Außenringteil sowie durch den Radialspalt hindurch in eine Gewindebohrung im zweiten Außenringteil eingreifen, wobei sich jeweils ein Schraubenkopf der wenigstens einen Stellschraube am ersten Außenringteil abstützt.

Der Schraubenkopf soll gegen ein Abheben vom ersten Außenringteil und damit für eine betriebsmäßig gleichbleibende Spaltbreite durch ein auf- oder einschraubbares Abstützelement sicherbar sein.

Zur Realisierung einer solchen Abstützung kann die Abstützfläche für den Schraubenkopf vertieft innerhalb einer größeren Gewindesackbohrung des ersten Außenringteils angeordnet sein, in die als Abstützelement eine Konterschraube zur Anlage und zur Abstützung auf den Schraubenkopf einschraubbar ist. Dabei kann für eine Durchführung einer einfachen Verstellung die Konterschraube einen Schraubenwerkzeugansatz sowie eine axial durchgehende Bohrung aufweisen, wobei durch diese Bohrung hindurch ein kleinerer Schraubwerkzeugansatz am Schraubenkopf erreichbar und betätigbar ist. Alternativ zu einer solchen Konterschraube kann als einfaches Abstützelement auf das erste Außenringteil ein Stützring aufgeschraubt werden, der den wenigstens einen Schraubenkopf einer Stellschraube von oben her anliegend abstützt. Auch hier kann im Bereich eines Schraubenkopfs eine Bohrung mit dem gegenüber kleinerem Durchmesser vorgesehen werden, durch die hindurch ein Schraubwerkzeugansatz am Schraubenkopf betätigbar ist.

Eine alternative einfache und kostengünstige Stellvorrichtung kann dadurch realisiert werden, dass die beiden Außenringteile kreiszylindrische Außenflächen mit gleichem Durchmesser aufweisen, wobei ein buchsenförmiger gegebenenfalls topfförmiger Stellring mit einem Innendurchmesser gleich dem Außendurchmesser der Außenringteile auf diese aufgesteckt ist und diese zumindest teilweise in axialer Richtung überdeckt. Im Überdeckungsbereich sind an den beiden Außenringteilen Eingriffvorsprünge vorzugsweise als Eingriffstifte und diesen zugeordnete Führungsnuten vorzugsweise als abschnittweise Führungsschlitze am Stellring oder Eingriffvorsprünge am Stellring und diesen zugeordnete Führungsnuten an den beiden Außenringteilen angebracht. Die Führungsnuten weisen eine relative Steigung zueinander auf, dergestalt dass durch ein Verdrehen des Stellrings die beiden Außenringteile stufenlos aufeinander zubewegbar sind und somit eine stufenlose Änderung und Einstellung der Spaltbreite des Radialspalts und damit der Federsteifigkeit durchführbar ist.

Um bei einer Änderung einer Einstellung gegebenenfalls eine relative Verdrehung der beiden Außenringteile zu verhindern, sind zwischen den beiden Außenringteilen Längsführungen, insbesondere als Längsführungsstifte in zugeordneten achsparallelen Bohrungen angeordnet.

Bei einer konkreten, besonders bevorzugten Ausführungsform sind die Führungsnuten oder Führungsnutabschnitte als Führungsschlitze in einem topfförmigen Stellring ausgeführt, in die an den Außenflächen der Außenringteile angebrachte Eingriffstifte eingreifen.

Zur Minimierung der Reibung zwischen den Führungsnuten und Eingriffvorsprüngen, insbesondere den Eingriffstiften können an den Anlageflächen reibungsmindernde Beläge und/oder Rollkörper angeordnet sein.

Anhand einer Zeichnung werden Ausführungsbeispiele der Erfindung weiter erläutert.

Es zeigen:
- Figur 1: einen Längsschnitt durch eine erste Ausführungsform eines einstellbaren Konuslagers im Herstellzustand,
- Figur 2: das Konuslager nach Figur 1 in maximaler Verstellposition für eine maximale Lagersteifigkeit,
- Figur 3: eine perspektivische Ansicht des Konuslagers nach den Figuren 1 und 2,
- Figur 4: einen Längsschnitt durch die Einzelteile eines zusammensteckbaren, einstellbaren Konuslagers einer zweiten Ausführungsform,
- Figur 5: das fertig montierte Konuslager nach Figur 4 im nicht zusammengespannten Zustand,
- Figur 6: das Konuslager nach Figur 5 in maximaler Verstellposition für eine maximale Lagersteifigkeit,
- Figur 7, Figur 8, Figur 9: eine Ausführung entsprechend den Figuren 4, 5, 6 mit einer modifizierten Verstelleinrichtung, und
- Figur 10: eine perspektivische Ansicht der modifizierten Ausführungsform nach den Figuren 7, 8, 9,
- Figur 11 bis 14: ein Konuslager entsprechend der ersten Ausführungsform mit einer weiteren alternativen Verstelleinrichtung.

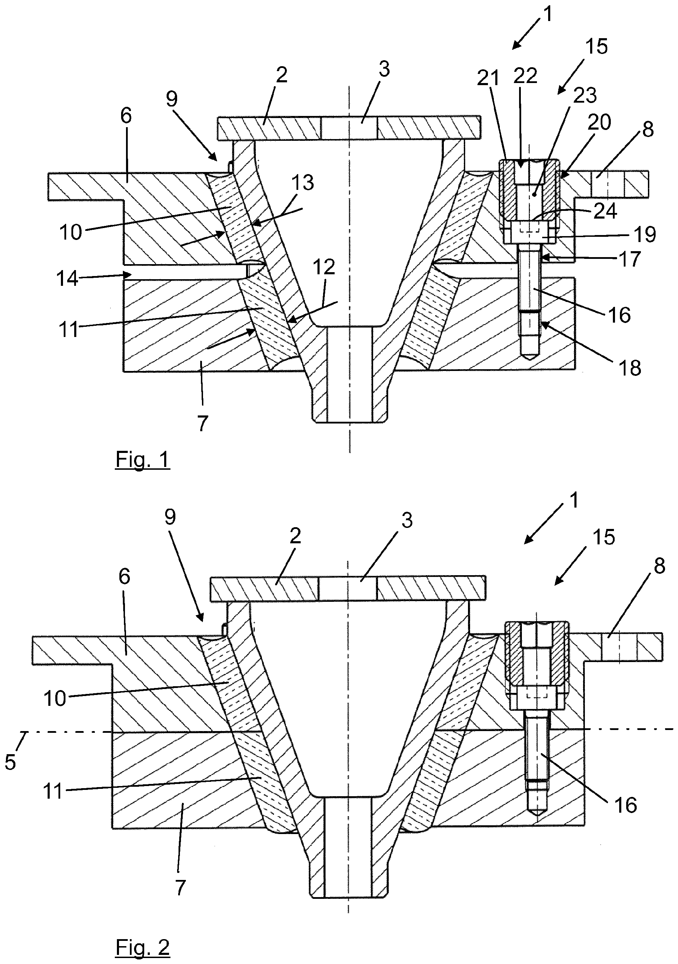

In den Figuren 1 und 2 ist ein Längsschnitt durch eine erste Ausführungsform eines Konuslagers 1 gezeigt. Das Konuslager 1 weist ein konvexes, kegelstumpfförmiges Konusinnenteil 2 mit einer zentralen Bohrung 3 auf, womit das Konusinnenteil 2 mit einem von zwei gegeneinander elastisch abstützbaren (nicht dargestellten) Strukturbauteilen und/oder Anbauteilen verbindbar ist.

Weiter weist das Konuslager 1 ein konkaves konisches Außenringteil auf, welches an einer radialen Teilungsebene 5 geteilt ist in ein erstes oberes Außenringteil 6 und in ein unteres zweites Außenringteil 7.

Am oberen ersten Außenringteil 6 sind an einem umlaufenden Flansch Anschlussbohrungen 8 zur Verbindung mit einem zweiten zu lagernden Strukturbauteil und/oder Anbauteil vorgesehen. Das erste Außenringteil 6 kann beispielsweise mit dem Rahmen eines Fahrzeugs und das Konusinnenteil 2 mit einem Hilfsaggregat eines Fahrzeugs verbunden sein.

Zwischen dem Konusinnenteil 2 und den Konusinnenflächen des ersten Außenringteils 6 und des zweiten Außenringteils 7 liegt ein Ringspalt 9, in dem ein erstes Elastomer-Ringelement 10 und ein zweites Elastomer-Ringelement 11 vorzugsweise als einvulkanisierte Gummischicht angeordnet sind. Das erste Elastomer-Ringelement 10 entspricht in seiner Längsausdehnung dem ersten Außenringteil 6 und ist hier als Gummielement sowohl am Konusinnenteil 2 als auch am ersten Außenringteil 6 anvulkanisiert.

Entsprechend ist das zweite Elastomer-Ringelement 11 dem zweiten Außenringteil 7 zugeordnet und ebenfalls als Gummischicht am Konusinnenteil 2 und an der Innenfläche des zweiten Außenringteils anvulkanisiert.

Im nicht vorgespannten Herstellzustand sind ein Radialspalt 14, das erste Außenringteil 6 und das zweite Außenringteil 7 sowie das erste Elastomer-Ringelement 10 und das zweite Elastomer-Ringelement 11 durch einen Radialspalt beabstandet, sodass entsprechend Figur 1 ist die Schichtdicke 12 des unteren zweiten Elastomer-Ringelements 11 dicker als die Schichtdicke 13 des ersten oberen Elastomer-Ringelements 10 ist.

Der Radialspalt 14 kann mit Hilfe einer Stellvorrichtung 15 in seiner Spaltbreite verändert werden. Die Stellvorrichtung 15 besteht aus mehreren, an der Oberseite des ersten Außenringteils am Umfang verteilt angeordneten Stellschrauben 16, welche jeweils durch eine achsparallele Bohrung 17 am ersten Außenringteil 6 sowie durch den Radialspalt 14 hindurch in eine Gewindebohrung 18 im zweiten Außenringteil 7 geführt ist. Der Schraubenkopf 19 stützt sich vertieft innerhalb einer größeren Gewindesackbohrung 20 ab und ist gegen ein Abheben mittels einer Konterschraube 21 gesichert. Die Konterschraube 21 weist einen zentralen Werkzeugansatz 22, insbesondere als Imbus auf mit einer anschließenden Durchgangsbohrung 23, durch die die Stellschraube 16 über einen weiteren Werkzeugansatz 24 verstellbar ist.

Damit kann die Lagersteifigkeit, insbesondere die Federkonstante in vertikaler Richtung in gewissen Grenzen verändert und eingestellt werden:
Ohne Stellschrauben 16 sind das erste Außenringteil 6 und das zweite Außenringteil 7 voneinander entkoppelt, so dass als Federelement nur das erste Elastomer-Ringteil 10 mit entsprechend geringer Lagersteifigkeit wirkt.

Mit den Stellschrauben 16 werden das erste Außenringteil 6 und das zweite Außenringteil 7 miteinander gekoppelt, wobei eine Spaltbreite des Radialspalts 14 einstellbar ist. Nach einer Einstellung und Sicherung der Stellschrauben 16 mit den zugehörigen Konterschrauben bleibt die Spaltbreite des Radialspalts 14 und damit eine Einstellung erhalten. Eine geringere Spaltbreite des Radialspalts 14 führt zu einer größeren Lagersteifigkeit, insbesondere zu einer Vergrößerung der axialen Federkonstante, wobei, wie ein Vergleich zwischen den Figuren 1 und 2 zeigt, insbesondere die Schichtdicke 12 des zweiten Elastomer-Ringteils 11 unter Aufbringung einer Vorspannung bei einer Spaltbreitenverkleinerung reduziert ist.

Wie aus Figur 2 ersichtlich, ist die Spaltbreitenreduzierung des Ringspalts 14 so lange möglich, bis das erste Außenringteil 6 und das zweite Außenringteil 7 auf Block aneinanderliegen, womit die größtmögliche Lagersteifigkeit eingestellt ist. Die größte und kleinste Lagersteifigkeit kann entsprechend der Figur 1 und Figur 2 eingestellt werden, wobei auch Zwischenwerte einstellbar sind.

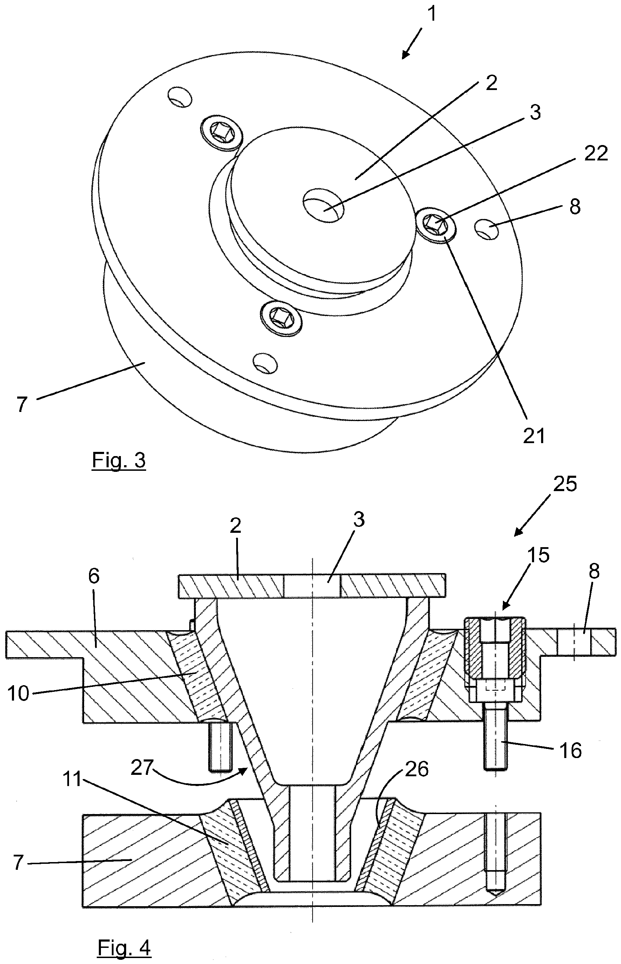

In Figur 3 ist eine perspektivische Ansicht des Konuslagers 1 der ersten Ausführungsform schräg von oben auf das Konusinnenteil 2 und das erste Außenteil 6 gezeigt.

In den Figuren 4, 5 und 6 ist eine zweite Ausführungsform eines zusammengesetzten Konuslagers 25 gezeigt, welches bei ähnlicher Funktion wie die erste Ausführungsform eine Reihe von baulichen Übereinstimmungen mit der ersten Ausführungsform des Konuslagers 1 aufweist, so dass für gleiche Elemente weiter gleiche Bezugszeichen verwendet sind.

Insbesondere ist der obere Bereich des Konuslagers 25 mit der dortigen Gestalt des Konusinnenteils, dem ersten Außenringteil 6, dem ersten Elastomer-Ringteil 10 und der Stellvorrichtung 15 gleich. Der Unterschied zur ersten Ausführungsform des Konuslagers 1 liegt hier darin, dass am zweiten Außenringteil 7 auch das zweite Elastomer-Ringelement 1 anvulkanisiert ist, jedoch die Innenseite des zweiten Elastomer-Ringelements 11 durch ein angehaftetes Konusinnenblech 26 gebildet ist. Das zweite Außenringteil 7 mit dem zweiten Elastomer-Ringelement 11 und dem Konusinnenblech 26 ist damit ein separates, auf das Konusinnenteil 2 aufsteckbares Vormontageelement.

Die Kegelfläche des Konusinnenteils im Bereich eines aufgesteckten Konusinnenblechs 26 weist einen radial Rückversatz 27 um die Dicke des Konusinnenblechs 26 auf mit einem radial umlaufenden Vorsprung 28 für eine axiale Abstützung des Konusinnenblechs 26 in Richtung auf das erste Außenringteil 6.

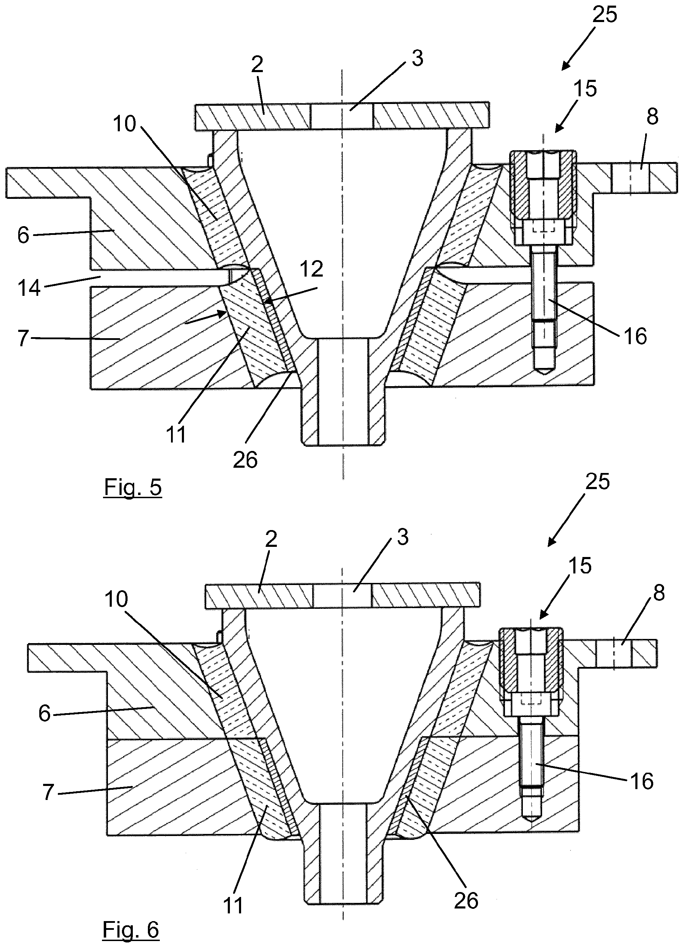

In Figur 4 sind die beiden separaten Lagerbauteile kurz vor dem Zusammenstecken gezeigt. In Figur 5 ist bereits das zweite Außenringteil 7 mit seinem zweiten Elastomer-Ringelement 11 und dem Konusinnenblech 26 auf das Konusinnenteil 2 von unten her aufgesteckt. Mit der Verstellvorrichtung 15 sind das erste Außenringteil 6 und das zweite Außenringteil 7 so festgelegt, dass auch hier ein Radialspalt 14 entsprechend der ersten Ausführungsform des Konuslagers 1 in Figur 1 vorliegt. Damit ergeben sich auch hier im Prinzip ähnliche Einstellmöglichkeiten wie bei der ersten Ausführungsform:
Die geringste Lagersteifigkeit wird erhalten, wenn das Konuslager 25 ohne das zweite Außenringteil 7 betrieben wird oder das zweite Außenringteil 7 nur lose, insbesondere mit einem Abstand aufgesteckt und befestigt ist, da dann nur das erste Elastomer-Ringelement 10 als Federelement wirkt. Bei einer Koppelung des ersten Außenringteils 6 und des zweiten Außenringteils 7 mit der Stellvorrichtung 15 kann die Spaltbreite des Ringspalts 14 im Wesentlichen mit einer Dickenverringerung der Schichtdicke 12 des zweiten Elastomer-Ringelements 11 eingestellt werden. Eine Verringerung der Spaltbreite des Radialspalts 14 führt auch hier zu einer größeren Lagersteifigkeit, insbesondere einer größeren Federkonstante in vertikaler Richtung. Die maximal einstellbare Federsteifigkeit ist auch hier bei der zweiten Ausführungsform des Konuslagers 25 erreicht, wenn das erste Außenringteil 6 und das zweite Außenringteil 7 auf Block aneinanderliegen, wie in Figur 6 dargestellt. Auch hier kann zwischen den beiden Stufen größte und kleinste Federsteifigkeit durch entsprechende Einstellungen geschaltet werden, wobei bei Bedarf auch Zwischenwerte einstellbar sind.

Die perspektivische Ansicht des Konuslagers 25 in der zweiten Ausführungsform entspricht Figur 3.

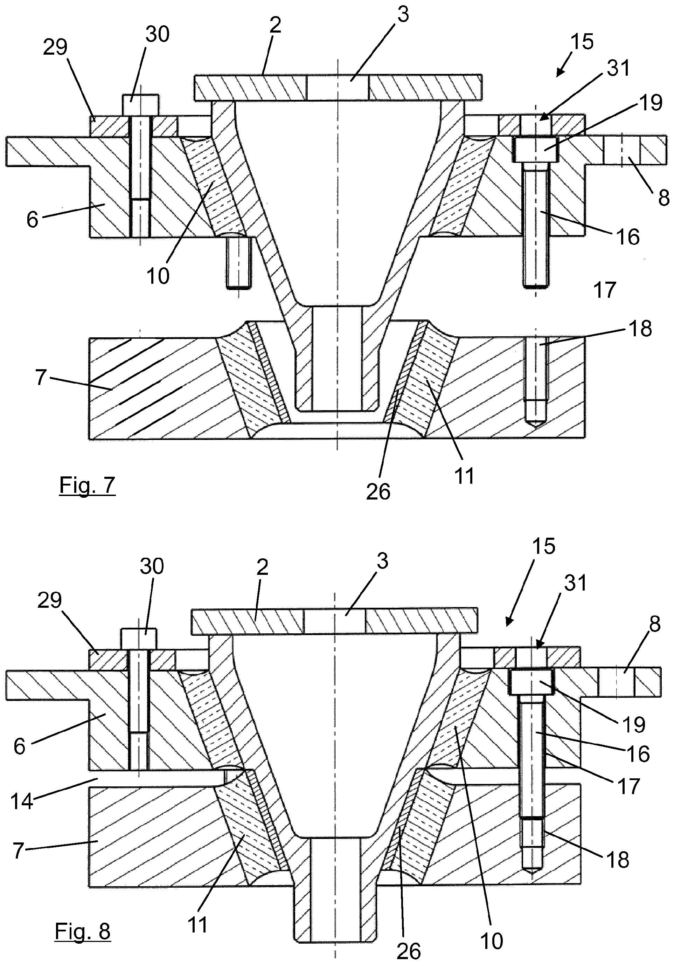

Eine hinsichtlich der Stellvorrichtung 15 modifizierte Ausführungsform entspricht in allen wesentlichen Bauteilen und Funktionen dem Konuslager 25 nach den Figuren 4 bis 6. Im Folgenden werden daher nur die Unterschiede hinsichtlich der Stellvorrichtung 15 erläutert:
Auch bei der Ausführung des Konuslagers 25 der Figuren 7 bis 10 weist die Stellvorrichtung 15 Stellschrauben 16 auf, wobei hier jeweils der Schraubenkopf 19 um seine Kopflänge versenkt im ersten Außenringteil angeordnet ist, so dass die Schraubenkopfoberseite plan mit der Oberseite des ersten Außenringteils 6 verläuft. Als Sicherung gegen ein Abheben der Strellschraube 16 und Sicherung einer getroffenen Einstellung ist hier auf das erste Außenringteil 6 von oben her ein Stützring 29 mittels Schrauben 30 aufgeschraubt. Im Bereich des Schraubenkopfs 19 weist der Stützring 29 jeweils eine vergleichsweise kleinere Bohrung 31 auf, durch die hindurch die Stellschraube 16 betätigbar ist.

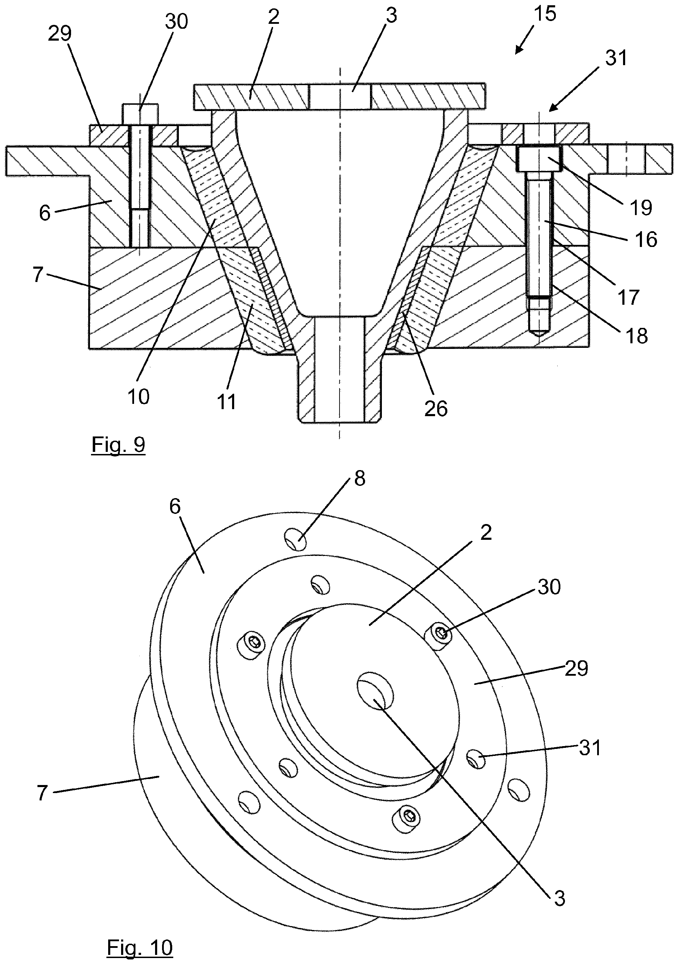

Bei dieser Ausführungsform mit der modifizierten Stellvorrichtung 15 zeigt Figur 7 den noch nicht zusammengesteckten Zustand entsprechend Figur 4. Der in Figur 8 gezeigte Zustand entspricht Figur 5 und der in Figur 9 dargestellte Zustand entspricht Figur 6. Aus der perspektivischen Darstellung nach Figur 10 ist der Stützring 29 mit seinen Schrauben 30 und den Bohrungen 31 ersichtlich.

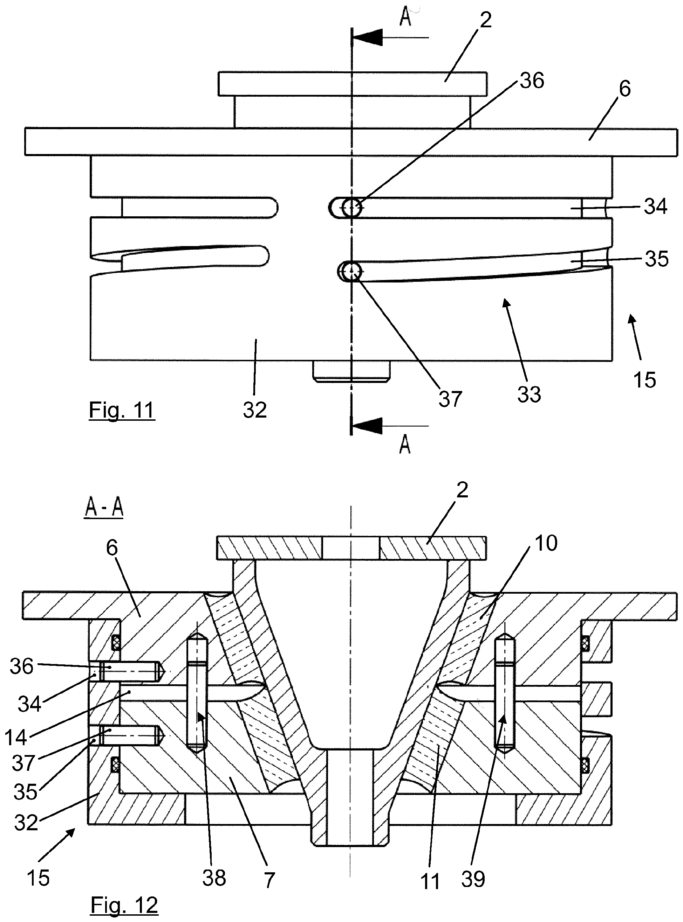

In den Figuren 11 bis 14 ist eine weitere Ausführungsform eines Konuslagers dargestellt, die im Wesentlichen der ersten Ausführungsform nach den Figuren 1 bis 3 entspricht, sich jedoch durch eine alternative Ausführung der Stellvorrichtung 15 unterscheidet.

Die Stellvorrichtung 15 ist hier so ausgeführt, dass die beiden Außenringteile 6, 7 jeweils kreiszylindrische Außenflächen mit gleichem Durchmesser aufweisen. (Auch bei den vorstehenden Ausführungsformen ist dies beispielhaft dargestellt, jedoch nicht zwingend erforderlich.) Ein buchsenförmiger Stellring 32, der topfförmig ausgebildet ist, hat einen Innendurchmesser gleich dem Außendurchmesser der Außenringteile 6, 7 und ist auf diese aufgesteckt, wobei er diese in Längsrichtung überdeckt.

Im Überdeckungsbereich sind hier an vier Umfangsbereiche 33 jeweils in Axialrichtung beabstandete Führungsschlitze 34, 35 als Führungsnuten für zugeordnete in die Führungsschlitze 34, 35 eingreifende Eingriffstifte angeordnet. Die an den beiden Außenringteilen 6, 7 abstehenden Eingriffstifte 36, 37 sind jeweils an einem der beiden Außenringteile 6, 7 angebracht, liegen in gleicher Axialrichtung und greifen jeweils an einem Umfangsbereich in einen der zugeordneten Führungsschlitzabschnitte 34, 35 ein.

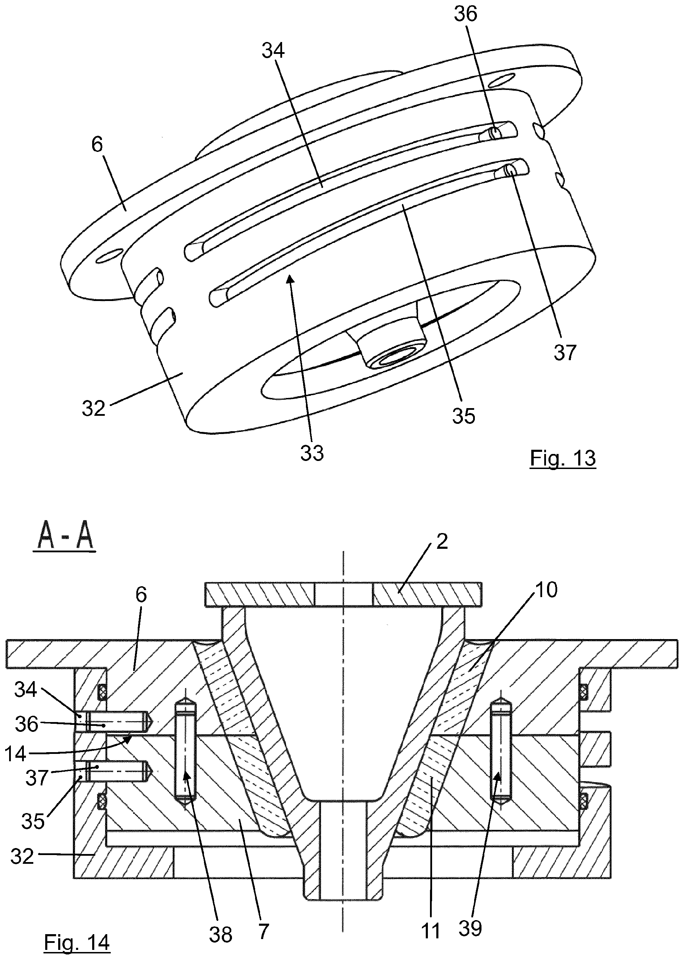

Wie insbesondere aus den Figuren 11 und 13 ersichtlich, weisen die Führungsschlitzabschnitte 34, 35 zueinander eine relative Steigung auf, wobei hier die Führungsschlitzabschnitte 34 in einer Radialebene liegen und die Führungsschlitzabschnitte 35 in der Darstellung der Figuren 11 und 13 rechtsdrehend ansteigen.

In den Figuren 11 und 12 ist ein unbelasteter Lagerzustand dargestellt, bei dem der Radialspalt 14 seine betriebsmäßig größte Spaltbreite und damit das Konuslager seine geringste Federsteifigkeit hat. Die Eingriffstifte 36 und 37 liegen dabei entsprechend dem weitesten Abstand der Außenringteile 6, 7 am weitesten auseinander.

Durch eine Rechtsdrehung des Stellrings 32 werden die Eingriffstifte 36, 37 durch deren Eingriff in die Führungsschlitzabschnitte 34, 35 aneinander angenähert und damit die Spaltbreite des Radialspalts 14 stufenlos verringert.

Diese stufenlose Vergrößerung der Federsteifigkeit bis zu einer maximalen Federsteifigkeit ist erreicht, wenn die Außenringteile 6, 7 auf Block aneinander liegen, wie dies in den Figuren 13 und 14 gezeigt ist. Dabei sind die Eingriffstifte 36, 37 rechtsdrehend bis zum Ende der Führungsschlitzabschnitte 34, 35 verstellt worden, wo sie ihren geringsten axialen Abstand aufweisen. Der Radialspalt 14 ist dabei geschlossen.

Um bei einer solchen Drehverstellung ein ungünstiges Mitverdrehen zwischen den Außenringteilen 6, 7 zu unterbinden, sind zwischen den Außenringteilen 6, 7 Längsführungen 38, 39 angeordnet, welche aus Längsführungsstiften bestehen, die in zugeordnete achsparallele Bohrungen verschiebbar eingreifen. Zudem können gegebenenfalls die Führungsschlitzabschnitte 34, 35 zum Schutz gegen eine Verschmutzung abgedeckt und/oder verschlossen werden.

## Patentansprüche

1. Konuslager als Elastomer-Metall-Lager mit einem konvexen, kegelförmigen Konusinnenteil (2) als erstes starres Metall-Lagerteil, welches mit einem von zwei gegeneinander elastisch abstützbaren Strukturbauteilen und/oder Anbauteilen verbindbar ist, mit einem konkaven Außenringteil als zweites starres Metall-Lagerteil zur Verbindung mit dem zweiten Strukturbauteil und/oder Anbauteil mit einer der Kegelform des Konusinnenteils (2) zugeordneten Konusinnenfläche, wobei das Konusinnenteil (2) mit einem umlaufenden Ringspalt (9) zwischen der Kegelfläche des Konusinnenteils (2) und der Konusinnenfläche im Außenringteil (6, 7) aufgenommen ist, und
mit einem konusförmigen Elastomer-Ringelement (10, 11) im Ringspalt (9) zwischen dem Konusinnenteil und dem Außenringteil (6, 7), **dadurch gekennzeichnet,**
**dass** das Außenringteil und das Elastomer-Ringelement in einer radialen Teilungsebene (5) quer zur Kegelachse des Konusinnenteils (2) geteilt sind in ein erstes Außenringteil (6) und in ein diesem zugeordnetes erstes Elastomer-Ringteil (10) mit jeweils größerem Konus-Innendurchmesser sowie in ein zweites Außenringteil (7) und in ein diesem zugeordnetes zweites Elastomer-Ringteil (11) mit jeweils einem dagegen kleineren Konus-Innendruchmesser,
**dass** im unbelasteten Herstellzustand bei am Konusinnenteil (2) anliegenden Elastomer-Ringelementen (10, 11) die beiden Außenringteile (6, 7) durch einen Radialspalt (14) zwischen dem ersten Außenringteil (6) und dem zweiten Außenringteil (7) beabstandet sind, insbesondere durch Dickenunterschiede der beiden Elastomer-Ringelemente (10, 11) und/oder durch Konusformunterschiede, und dass eine Stellvorrichtung (15) an den Außenringteilen (6, 7) angeordnet ist zur Änderung und Einstellung der Spaltbreite des Radialspalts (14) dergestalt, dass durch eine Spaltbreitenvergrößerung oder durch eine Spaltbreitenverkleinerung mit Aufbringung einer Vorspannung und einer Schichtdickenänderung der Elastomer-Ringelemente (10, 11) eine zugeordnete Änderung und Einstellung der axialen und radialen Federkonstante des Konuslagers (1; 25) durchführbar ist.

2. Konuslager nach Anspruch 1, **dadurch gekennzeichnet, dass** das erste Elastomer-Ringelement (10) am Konusinnenteil (2) und am ersten Außenringteil (6) angehaftet ist, bei Gummi als Elastomermaterial anvulkanisiert ist.

3. Konuslager nach Anspruch 2, **dadurch gekennzeichnet, dass** auch das zweite Elastomer-Ringelement (11) am Konusinnenteil (2) und am zweiten Außenringteil (7) angehaftet ist, bei Gummi als Elastomermaterial anvulkanisiert ist.

4. Konuslager nach Anspruch 2, **dadurch gekennzeichnet, dass** am zweiten Außenringteil (7) das zweite Elastomer-Ringelement (7) angehaftet ist und die Innenseite des zweiten Elastomer-Ringelements (11) durch ein angehaftetes Konus-Innenblech (26) gebildet ist,
dass das zweite Außenringteil (7) mit dem zweiten Elastomer-Ringelement (11) und dem Konus-Innenblech (26) ein auf das Konusinnenteil (2) aufsteckbares Vormontageelement ist, das zur Komplettierung des Konuslagers (25) auf das Konusinnenteil (3) aufgesteckt und mit der Stellvorrichtung (15) verbunden ist.

5. Konuslager nach Anspruch 4, **dadurch gekennzeichnet, dass** in einem Set unterschiedlich dimensionierte Vormontageelemente zur Verfügung stehen.

6. Konuslager nach Anspruch 4 oder Anspruch 5, **dadurch gekennzeichnet, dass** die Kegelfläche im Bereich des aufgesteckten Konus-Innenblechs (26) einen radialen Rückversatz (27) um die Dicke des Konus-Innenblechs (2) aufweist mit einem radial umlaufenden Vorsprung (28) in Aufsteckrichtung für eine axiale Abstützung des Konus-Innenblechs (26) und damit des zweiten Elastomer-Ringelements (11) in Richtung auf das erste Außenringteil (6).

7. Konuslager nach einem der Ansprüche 1 bis 6, **dadurch gekennzeichnet, dass** am ersten Außenringteil (6) als im Einbauzustand oberen Außenringteil (6) außenrandseitige Anschlusselemente (8) zur Verbindung mit einem Strukturbauteil und/oder einem Anbauteil vorgesehen sind und das im Einbauzustand sich nach unten verjüngende Konusinnenteil (2) eine zentrale Anschlussbohrung (3) als Anschlusseinrichtung für ein zweites Strukturbauteil und/oder Anbauteil aufweist.

8. Konuslager nach einem der Ansprüche 1 bis 7, **dadurch gekennzeichnet, dass** die Stellvorrichtung (15) wenigstens eine Stellschraube (16) aufweist, die durch eine achsparallele Bohrung (17) im ersten Außenringteil (6) sowie durch den Radialspalt (14) hindurch in eine Gewindebohrung (18) im zweiten Außenringteil (7) geführt ist, wobei sich ein Schraubenkopf (19) der wenigstens einen Stellschraube (16) am ersten Außenringteil (6) abstützt.

9. Konuslager nach Anspruch 8, **dadurch gekennzeichnet, dass** der Schraubenkopf (19) gegen ein Abheben vom ersten Außenringteil (6) und für eine betriebsmäßig gleichbleibende Spaltbreite durch ein auf- oder einschraubbares Abstützelement (21; 29) sicherbar ist.

10. Konuslager nach Anspruch 9, **dadurch gekennzeichnet, dass** die Abstützfläche für den Schraubenkopf (19) vertieft innerhalb einer größeren Gewindesackbohrung (20) des ersten Außenringteils (6) angeordnet ist, in die als Abstützelement eine Konterschraube (21) zur Abstützung auf dem Schraubenkopf (19) einschraubbar ist, und dass dazu die Konterschraube (21) einen Schraubwerkzeugansatz (22) sowie eine axial durchgehende Bohrung (23) aufweist, durch die hindurch ein kleinerer Schraubwerkzeugansatz (24) am Schraubenkopf (19) betätigbar ist.

11. Konuslager nach Anspruch 9, **dadurch gekennzeichnet, dass** als Abstützelement auf das erste Außenringteil (6) ein Stützring (29) aufschraubbar ist, der den Schraubenkopf (19) einer Stellschraube (16) von oben her anliegend abstützt gegebenenfalls mit einer gegenüber dem Durchmesser des Schraubenkopfs (19) kleinerer Bohrung (31), durch die ein Schraubwerkzeugansatz am Schraubenkopf (19) betätigbar ist.

12. Konuslager nach einem der Ansprüche 1 bis 7, **dadurch gekennzeichnet, dass** die beiden Außenringteile (6, 7) kreiszylindrische Außenflächen mit gleichem Durchmesser aufweisen,
dass ein buchsenförmiger Stellring (32) mit einem Innendurchmesser gleich dem Außendurchmesser der Außenringteile (6, 7) auf diese aufgesteckt ist und diese zumindest teilweise in axialer Richtung überdeckt,
dass im Überdeckungsbereich an den beiden Außenringteilen (6, 7) Eingriffvorsprünge (36, 37) und diesen zugeordnete Führungsnuten (34, 35) am Stellring (32) oder Eingriffvorsprünge am Stellring und diesen zugeordnete Führungsnuten an den beiden Außenringteilen angebracht sind, und
dass die Führungsnuten (34, 35) eine relative Steigung zueinander aufweisen, dergestalt dass durch ein Verdrehen des Stellrings (32) die beiden Außenringteile (6, 7) stufenlos aufeinander zubewegbar sind und somit eine stufenlose Änderung und Einstellung der Spaltbreite des Radialspalts (14) und damit der Federsteifigkeit durchführbar ist.

13. Konuslager nach Anspruch 12, **dadurch gekennzeichnet, dass** die Führungsnuten am Umfang an mehreren beabstandeten Umfangsbereichen (33) als Führungsnutenabschnitte (34, 35), vorzugsweise an drei oder vier Umfangsbereichen (33) angeordnet sind, und
dass die Eingriffvorsprünge Eingriffstifte (36, 37) sind, die jeweils in den Umfangsbereichen (33) angeordnet sind, wobei jeweils ein Eingriffstift (36, 37) in einen Führungsnutenabschnitt (34, 35) eingreift.

14. Konuslager nach Anspruch 12 oder Anspruch 13, **dadurch gekennzeichnet, dass** zwischen den beiden Außenringteilen (6, 7) Längsführungen (38, 39), insbesondere als Längsführungsstifte in zugeordneten achsparallelen Bohrungen, angeordnet sind.

15. Konuslager nach einem der Ansprüche 12 bis 14, **dadurch gekennzeichnet, dass** die Führungsnuten oder Führungsnutabschnitte als Führungsschlitze (34, 35) in einem topfförmigen Stellring (32) ausgeführt sind, in die an den Außenflächen der Außenringteile (6, 7) angebrachte Eingriffstifte (36, 37) eingreifen.

16. Konuslager nach einem der Ansprüche 12 bis 15, **dadurch gekennzeichnet, dass** zur Minimierung der Reibung zwischen den Führungsnuten (34, 35) und Eingriffvorsprüngen, insbesondere den Eingriffstiften (36, 37) an den Anlageflächen reibungsmindernde Beläge und/oder Rollkörper angeordnet sind.
